# EUROPÄISCHE PATENTSCHRIFT

(11) **EP 3 992 789 B1**
(45) Veröffentlichungstag und Bekanntmachung des Hinweises auf die Patenterteilung: **10.12.2025**
(21) Anmeldenummer: 21201656.2
(22) Anmeldetag: 08.10.2021
(51) Int. Cl.: G06F 9/451, H04L 67/131, H04L 67/125

(54) **KOPPLUNG EINES HAUSHALTSGERÄTS MIT EINEM MOBILGERÄT**
COUPLING OF A DOMESTIC APPLIANCE WITH A MOBILE DEVICE
COUPLAGE D'UN APPAREIL ÉLECTROMÉNAGER À UN APPAREIL MOBILE

(30) Priorität: 02.11.2020 DE 102020213755
(43) Veröffentlichungstag der Anmeldung: 04.05.2022
(73) Patentinhaber: BSH Hausgeräte GmbH, 81739 München (DE)
(72) Erfinder: Grimminger, Jochen, 89407 Dillingen (DE); Schaefer, Frank, 82178 Puchheim (DE)

(56) Entgegenhaltungen:
- EP-A1- 2 787 434
- US-A1- 2018 253 324

## Beschreibung

Die Erfindung betrifft ein Haushaltsgerät. Insbesondere betrifft die Erfindung eine drahtlose Kopplung eines Haushaltsgeräts mit einem Mobilgerät.

Ein Haushaltsgerät umfasst eine grafische Anzeige, auf der ein Zustand des Geräts dargestellt werden kann. Beispielsweise kann die Anzeige an einem Kühlgerät eine Innentemperatur, einen Füllgrad, eine aktuell aufgenommene Energie oder einen Betriebsmodus darstellen. Eine Bedienung des Haushaltsgeräts erfolgt üblicherweise mittels einer lokal angebrachten Eingabeeinrichtung, beispielsweise eines Schalters oder Drehknopfs. Die Eingabevorrichtung kann mit der Ausgabevorrichtung integriert ausgeführt sein, beispielsweise in Form eines berührungsempfindlichen Bildschirms (Touchscreen).

Die grafische Anzeige kann verwendet werden, um einem Benutzer eine zusätzliche Funktion bereitzustellen, die über die Steuerung des Haushaltsgeräts hinausgehen kann. Beispielsweise kann auf der Anzeige ein Kochrezept dargestellt werden. Es hat sich aber gezeigt, dass die Bereitstellung der zusätzlichen Funktion, im gegebenen Beispiel die Vorhaltung einer Sammlung von Kochrezepten, aufwändig zu implementieren sein kann. Die Funktion muss üblicherweise auf funktionaler Ebene und auf Daten-Ebene regelmä-ßig aktualisiert werden. Dabei kann eine Lebensdauer des Haushaltsgeräts eine Lebensdauer einer üblichen Plattform, mit der die Funktion klassischerweise bereitgestellt werden kann, um ein Vielfaches übersteigen. Das Haushaltsgerät kann daher schon weit vor dem Ende seiner Nutzungsdauer nicht mehr in der Lage sein, die zusätzliche Funktion in ihrer aktuellen Form zuverlässig auszuführen.

Eine Ausstattung des Haushaltsgeräts mit einer leistungsfähigen Verarbeitungseinrichtung kann kostenintensiv sein; außerdem ist üblicherweise nicht bekannt, welche konkreten Anforderungen zukünftig an die Bereitstellung der Funktion gestellt werden, sodass die Verarbeitungseinrichtung in einem benötigten Aspekt trotzdem unterdimensioniert sein kann.

WO 2018 085 804 A1 schlägt vor, eine vorbestimmte Funktion auf einem Mobilgerät auszuführen, eine Ausgabe der Funktion auf ein Haushaltsgerät zu übertragen und die Ausgabe dort bereitzustellen. Durch die zusätzliche Ausgabe könnte jedoch eine Steuerbarkeit einer Funktion des Haushaltsgeräts beeinträchtigt werden. Außerdem könnte das Haushaltsgerät durch die Funktion für unvorhergesehene Zwecke missbraucht werden.

EP 2 787 434 A1 zeigt einen Monitor, der zur visuellen Darstellung von Anzeigen von zwei oder mehreren Apps, d.h. Anwendungsprogrammen, dient, die auf anderen Geräten betrieben werden.

US 2018/253324 A1 offenbart das Filtern von Teilen anzeigbarer Inhalte von Apps, d.h. Anwendungsprogrammen.

Eine der vorliegenden Erfindung zugrunde liegende Aufgabe liegt in der Bereitstellung einer verbesserten Technik zur Steuerung einer Ausgabe eines Haushaltsgeräts, das mit mindestens einem Mobilgerät gekoppelt ist. Die Erfindung löst diese Aufgabe mittels des Gegenstands des Anspruchs 1. Unteransprüche geben bevorzugte Ausführungsformen wieder.

Erfindungsgemäß wird ein Haushaltsgerät, nämlich ein Küchengerät, vorgeschlagen, das eine Kommunikationseinrichtung zur drahtlosen Kommunikation; eine Ausgabevorrichtung, nämlich eine grafische Anzeige, auf der ein Zustand des Haushaltsgeräts anzeigbar ist; und eine Verarbeitungseinrichtung umfasst.

Dabei ist die Verarbeitungseinrichtung dazu eingerichtet, eine Anzahl von Mobilgeräten, worauf mindestens zwei eine jeweilige Ausgabe erzeugende Programme installiert sind, drahtlos mit dem Haushaltsgerät zu koppeln.

Die Ausgabevorrichtung ist dazu verwendbar, einem Benutzer auf dem Haushalts- bzw. Küchengerät eine über seine eigene Steuerung hinausgehende Funktion, nämlich die Ausgabe mindestens eines der Programme der Anzahl von Mobilgeräten anzuzeigen.

Ferner ist die Verarbeitungseinrichtung dazu eingerichtet, auf der Basis eines vorbestimmten Regelwerks zu entscheiden, die Ausgabe welches oder welcher der mindestens zwei Programme der Anzahl von Mobilgeräten in welcher Form auf der Ausgabevorrichtung des Haushaltsgeräts angezeigt wird..

Die Verarbeitungseinrichtung kann durchaus mehrere Mobilgeräte mit dem Haushaltsgerät verbinden. Dabei kann es zu Konflikten kommen. Beispielsweise können auf einem ersten Mobilgerät, das mit dem Haushaltsgerät verbunden ist, ein Programm A und ein Programm B ablaufen, die jeweils eine Ausgabe erzeugen. Im selben Beispiel kann es ein zweites Mobilgerät geben, das ebenfalls mit dem Haushaltsgerät verbunden ist, wobei auf dem zweiten Mobilgerät ein Programm C und ein Programm D ablaufen, die wiederum jeweils eine Ausgabe erzeugen. In einem solchen Szenario kann es strittig sein, welche Ausgabe die höchste Priorität genießt und damit auf der Ausgabevorrichtung des Haushaltsgeräts anzuzeigen ist. Zur Lösung dieses Problems kann die besagte Verarbeitungseinrichtung dazu eingerichtet sein, auf der Basis des vorbestimmten Regelwerks zu entscheiden, welche Ausgabe der Programme A bis D in welcher Form auf der Ausgabevorrichtung des Haushaltsgeräts bereitgestellt werden soll. Dabei kann es auch durchaus vorkommen, dass keine der Ausgaben auf der Ausgabevorrichtung bereitgestellt wird oder auch mehrere Ausgaben nebeneinander. Selbst wenn nur das erste Mobilgerät mit den Programmen A und B mit dem Haushaltsgerät gekoppelt ist, kann es zu Konflikten kommen, die durch das Regelwerk aufgelöst werden können.

Allgemein gesprochen kann die Verarbeitungseinrichtung also dazu eingerichtet sein, mindestens ein Mobilgerät drahtlos mit dem Haushaltsgerät zu koppeln, wobei auf dem mindestens einen Mobilgerät mindestens zwei Programme installiert sind, die dafür eingerichtet sind, eine Ausgabe zu erzeugen. Die Verarbeitungseinrichtung ist dann vorzugsweise dazu eingerichtet, auf der Basis des vorbestimmten Regelwerks zu entscheiden, welche Ausgabe der mindestens zwei Programme in welcher Form auf der Ausgabevorrichtung des Haushaltsgeräts bereitgestellt wird. Wie bereits erwähnt können die beiden Programme auch durchaus auf demselben Mobilgerät installiert sein oder aber zwei Mobilgeräte mit jeweils einem Programm können mit dem Haushaltsgerät gekoppelt sein.

Auf der Basis des Regelwerks kann bestimmt werden, welche Ausgabe auf der Ausgabevorrichtung erscheinen soll, und welche nicht. So kann beispielsweise einem Missbrauch des Haushaltsgeräts durch ein nicht autorisiertes Mobilgerät vorgebeugt werden. Außerdem kann eine Überfüllung der Ausgabevorrichtung durch empfangene Inhalte verhindert werden. Beispielsweise kann ein vorbestimmter Abschnitt der Ausgabevorrichtung zur Darstellung eines Parameters reserviert sein, der eine Steuerung einer Funktion des Haushaltsgeräts zugeordnet ist. Handelt es sich bei der Ausgabevorrichtung um einen berührungsempfindlichen Bildschirm (Touchscreen), so kann gleichzeitig eine Bedienbarkeit der Funktion sichergestellt sein. Das Haushaltsgerät kann unabhängig von der Bereitstellung einer empfangenen Ausgabe durch einen Benutzer steuerbar bleiben. In einer weiteren Ausführungsform kann die Steuerbarkeit genutzt werden, um das Regelwerk zu verändern, sodass ein auf der Ausgabevorrichtung bereitgestellter Inhalt durch einen Benutzer stets steuerbar bleiben kann.

Die Verarbeitungseinrichtung ist bevorzugt dazu eingerichtet, das Regelwerk von einer externen Stelle herunterzuladen oder zu aktualisieren. Die externe Stelle kann insbesondere einen zentralen Server oder einen Dienst umfassen, der beispielsweise in einer Cloud realisiert sein kann. Die externe Stelle kann mittels kryptografischer Verfahren authentisiert werden, sodass ein Herunterladen eines kompromittierten Regelwerks verhindert werden kann. Die Verarbeitungseinrichtung kann zur Kopplung eines weiteren Mobilgeräts eingerichtet sein (so dass beispielsweise zu einem ersten Mobilgerät noch ein zweites hinzukommt), wobei eine Priorität von Ausgaben der Mobilgeräte auf der Basis des Regelwerks bestimmt werden kann. Prinzipiell können beliebig viele Mobilgeräte mit dem Haushaltsgerät gekoppelt werden. Ein zur Anzeige von Inhalten verfügbarer Platz auf einer optischen Ausgabevorrichtung ist beschränkt, sodass durch die Priorisierung der Ausgaben sichergestellt werden kann, dass eine oder mehrere der Ausgaben angemessen groß dargestellt werden, während andere möglicherweise nur teilweise oder gar nicht dargestellt werden.

In einer Ausführungsform wird eine Ausgabe eines Mobilgeräts bereitgestellt, falls keine höher priorisierte Ausgabe zur Bereitstellung vorliegt. Anders ausgedrückt kann zu jedem Zeitpunkt nur eine Ausgabe mit der höchsten Priorität bereitgestellt werden. Niedriger priorisierte Ausgaben können so lange nicht dargestellt werden, bis sie nicht selbst höchst priorisiert sind. Eine Ausgabe kann beispielsweise durch eine Bestätigung eines Benutzers von der Ausgabevorrichtung entfernt werden.

In noch einer weiteren Ausführungsform wird eine Ausgabe eines Mobilgeräts einer niedriger priorisierten Ausgabe durch eine höher priorisierte Ausgabe überlagert. Die Überlagerung kann insbesondere grafisch erfolgen. Die höher priorisierte Ausgabe kann beispielsweise in Form eines eingeblendeten Fensters, eines Modaldialogs oder einer Nachricht im Vordergrund bereitgestellt sein.

Das Regelwerk kann auf der Basis von vorbestimmten Angaben definiert sein, wobei jede Angabe in Form einer Liste vorgegeben sein kann. Beispielsweise kann das Regelwerk eine erste Angabe von Mobilgeräten umfassen, deren Ausgaben auf der Ausgabevorrichtung nicht bereitgestellt werden dürfen. Die erste Angabe kann auch Negativliste, Schwarze Liste oder Blacklist genannt werden. Eine Identifikation des Mobilgeräts wird üblicherweise beim Herstellen der Kopplung zum Haushaltsgerät bestimmt und kann bei der Übertragung von Informationen wiederholt werden. Mittels der ersten Angabe kann beispielsweise ein Mobilgerät von der Ausgabevorrichtung ausgeschlossen werden, das als böswillig eingestuft ist.

Das Regelwerk kann eine zweite Angabe von Mobilgeräten umfassen, deren Ausgaben auf der Ausgabevorrichtung bereitgestellt werden dürfen. In Form einer Liste kann die zweite Angabe auch als Positivliste, Weiße Liste oder Whitelist bezeichnet werden.

Das Regelwerk kann eine dritte Angabe von Funktionen eines Mobilgeräts umfassen, deren Ausgaben auf der Ausgabevorrichtung bereitgestellt werden dürfen. Anders ausgedrückt kann die dritte Angabe eine Positivliste für Funktionen umfassen. Eine Funktion eines Mobilgeräts kann durch ein Programm oder eine Applikation ("App") bereitgestellt sein. In entsprechender Weise kann auch eine Negativliste für Funktionen eines Mobilgeräts bereitgestellt sein.

Das Regelwerk kann eine vierte Angabe von Inhalten umfassen, die auf der Ausgabevorrichtung bereitgestellt werden dürfen. Erlaubte Inhalte können beispielsweise Text oder Grafiken betreffen. Dabei kann jeweils beispielsweise ein Umfang, eine Größe, eine Auflösung, eine Farbtiefe oder ein Inhalt bestimmt sein, der auf der Ausgabevorrichtung bereitgestellt werden darf. In Form einer Liste kann die vierte Angabe eine Positivliste von Inhalten betreffen. Dementsprechend kann auch eine Negativliste von Inhalten bereitgestellt sein, die nicht auf der Ausgabevorrichtung bereitgestellt werden dürfen.

Es ist zu beachten, dass unterschiedliche Angaben bzw. Listen vom Regelwerk umfasst sein können. Dabei können die Angaben in einer vorbestimmten Reihenfolge berücksichtigt werden. Die Angaben können insbesondere nach Art einer Firewall für ein Computernetzwerk durchgegangen werden, wobei eine Angabe, die auf eine empfangene Ausgabe anwendbar ist, optional unmittelbar angewendet werden kann, ohne weitere Angaben zu überprüfen. Eine passende positive Angabe kann zur unmittelbaren Bereitstellung der Ausgabe auf der Ausgabevorrichtung führen, während eine anwendbare negative Angabe unmittelbar zur Zurückweisung der Ausgabe führen kann.

In entsprechender Weise, wie eine Ausgabe des Mobilgeräts an das Haushaltsgerät übermittelt und dort bereitgestellt wird, kann eine Eingabe am Haushaltsgerät an das Mobilgerät übermittelt und dort verarbeitet werden. In einer Ausführungsform kann auch eine am Haushaltsgerät erfasste Eingabe einer Überprüfung durch das Regelwerk unterzogen werden.

Das Haushaltsgerät kann eine Eingabevorrichtung umfassen, wobei die Verarbeitungseinrichtung dazu eingerichtet ist, eine Eingabe an der Eingabevorrichtung auf der Basis des Regelwerks an das Mobilgerät bereitzustellen. In einer Ausführungsform sind einer Eingabe und einer Ausgabe unterschiedliche Regelwerke zugeordnet; in einer anderen Ausführungsform ist nur ein Regelwerk für Eingaben und Ausgaben definiert. Eine zurückgewiesene Eingabe oder Ausgabe kann verworfen werden oder die Übermittlung von Informationen mit der betreffenden Funktion bzw. dem betreffenden Mobilgerät kann abgebrochen werden. Im Falle mehrerer Mobilgeräte kann die Eingabe an ein durch das Regelwerk festgelegtes Mobilgerät oder an durch das Regelwerk festgelegte Mobilgeräte bereitgestellt werden.

Das Haushaltsgerät kann ferner eine Speichervorrichtung zur Aufnahme einer Eingabe umfassen, falls die drahtlose Verbindung oder Kopplung vorübergehend unterbrochen ist. Beispielsweise kann die Verbindung unterbrochen oder gestört sein, wenn eine Person, die das Mobilgerät mit sich führt, sich im Bereich des Haushaltsgeräts bewegt. Die vorübergehende Unterbrechung kann für das Haushaltsgerät und das Mobilgerät bzw. jeweils darauf ablaufenden Funktionen transparent sein. Die drahtlose Verbindung kann erst dann abgebaut werden, wenn sie über mehr als eine vorbestimmte Dauer unterbrochen bzw. gestört ist. Dann kann beispielsweise das Haushaltsgerät einen durch eine Ausgabe des Mobilgeräts belegten Platz auf der Ausgabevorrichtung freigeben. Im Falle mehrerer Mobilgeräte kann die Speichervorrichtung die Eingabe aufnehmen, falls eine drahtlose Kopplung zu einem oder auch mehreren der Mobilgeräte vorübergehend unterbrochen ist.

Ein weiterer Aspekt im Zusammenhang mit der vorliegenden Erfindung ist ein System, umfassend ein hierin beschriebenes Haushaltsgerät sowie mindestens ein Mobilgerät, die drahtlos miteinander gekoppelt sind. Über die Kopplung können eine Eingabe am Haushaltsgerät an das Mobilgerät übermittelt und dort verarbeitet werden. Außerdem kann eine Ausgabe des Mobilgeräts an das Haushaltsgerät übermittelt und dort an einen Benutzer bereitgestellt werden. Das Haushaltsgerät kann relativ einfach als "unintelligentes Endgerät" (Dumb Terminal) ausgeführt sein, das lediglich Ausgaben des Mobilgeräts an einen Benutzer und Eingaben des Benutzers an das Mobilgerät bereitstellen kann. Da die Ausführung der Funktion seitens des Mobilgeräts durchgeführt wird, kann das Haushaltsgerät bereits mit einer geringen Verarbeitungskapazität auskommen.

In einer denkbaren Anwendung wird auf dem Mobilgerät bzw. auf einigen der Mobilgeräte oder auf jedem der Mobilgeräte eine erste Komponente zur Erzeugung der Ausgabe ausgeführt, und auf dem Haushaltsgerät eine zweite Komponente zur Bereitstellung der Ausgabe auf der Ausgabevorrichtung. Dabei sind das Haushaltsgerät und das Mobilgerät dazu eingerichtet, eine vorübergehend unterbrochene drahtlose Kopplung wiederherzustellen, ohne eine Funktion der ersten oder der zweiten Komponente zu beeinflussen. Anders ausgedrückt können das Mobilgerät und das Haushaltsgerät eine drahtlose Verbindung transparent auch bei vorübergehenden Störungen aufrechterhalten, ohne dass eine lesende oder schreibende Komponente seitens des Haushaltsgeräts oder seitens des Mobilgeräts von einer nur kurzfristigen Unterbrechung oder Störung informiert werden muss.

Ein ähnlicher Aspekt betrifft ein erstes Verfahren, umfassend Schritte zum Bereitstellen einer Ausgabe eines Mobilgeräts auf einer Ausgabevorrichtung eines Haushaltsgeräts, das drahtlos mit dem Mobilgerät gekoppelt ist, des Empfangens einer Ausgabe des Mobilgeräts; des Prüfens, anhand eines vorbestimmten Regelwerks, ob die Ausgabe auf der Ausgabevorrichtung bereitgestellt werden darf; und des Bereitstellens der Ausgabe in Abhängigkeit eines Prüfungsergebnisses. Im Falle, dass mehrere Mobilgeräte mit dem Haushaltsgerät verbunden sind oder auf einem Mobilgerät mehr als ein Programm installiert ist, kann dieses Verfahren folgende Schritte umfassen: Empfangen jeweils einer Ausgabe der mindestens zwei Programme, Prüfen anhand eines vorbestimmten Regelwerks, welche Ausgabe der mindestens zwei Programme in welcher Form auf der Ausgabevorrichtung bereitgestellt werden soll und Bereitstellen der Ausgabe in Abhängigkeit eines Prüfungsergebnisses. Das Verfahren kann auf einem hierin beschriebenen Haushaltsgerät ausgeführt werden. Merkmale oder Vorteile des Verfahrens können auf das hierin beschriebene Haushaltsgerät oder ein das Haushaltsgerät umfassendes System übertragen werden oder umgekehrt.

Ein anderer Aspekt betrifft ein zweites Verfahren zum Bereitstellen einer Eingabe an einer Eingabevorrichtung eines Haushaltsgeräts, das drahtlos mit einem Mobilgerät gekoppelt ist, an das Mobilgerät, Schritte des Erfassens einer Eingabe an der Eingabevorrichtung; des Prüfens, anhand eines vorbestimmten Regelwerks, ob die Eingabe an das Mobilgerät bereitgestellt werden darf; und des Bereitstellens der Eingabe an das Mobilgerät in Abhängigkeit eines Prüfungsergebnisses. Im Falle mehrerer Mobilgeräte kann anhand des vorbestimmten Regelwerks geprüft werden, ob die Eingabe an eines oder mehrere der Mobilgeräte bereitgestellt werden darf. Dementsprechend wird die Eingabe dann an ein oder mehrere durch das Regelwerk festgelegte Mobilgeräte bereitgestellt. Das zweite Verfahren kann ebenfalls auf einem Haushaltsgerät ausgeführt werden. Merkmale oder Vorteile des Verfahrens können auf ein hierin beschriebenes System oder ein von ihm umfasstes Haushaltsgerät übertragen werden oder umgekehrt.

Die beschriebenen Verfahren können in Form eines Computerprogrammprodukts mit Programmcodemitteln vorliegen. Das Haushaltsgerät kann eine Verarbeitungseinrichtung umfassen, die insbesondere als Mikrocomputer oder Mikroprozessor ausgebildet ist.

Ausführungsformen der Erfindung werden nun unter Bezug auf die beiliegenden Figuren genauer beschrieben, in denen:
- Figur 1: ein System mit einem Haushaltsgerät und einem Mobilgerät;
- Figur 2: eine Kommunikation zwischen einem Mobilgerät und einem Haushaltsgerät;
- Figur 3: ein erstes Verfahren zum Steuern eines Haushaltsgeräts; und
- Figur 4: ein zweites Verfahren zum Steuern eines Haushaltsgeräts
darstellt.

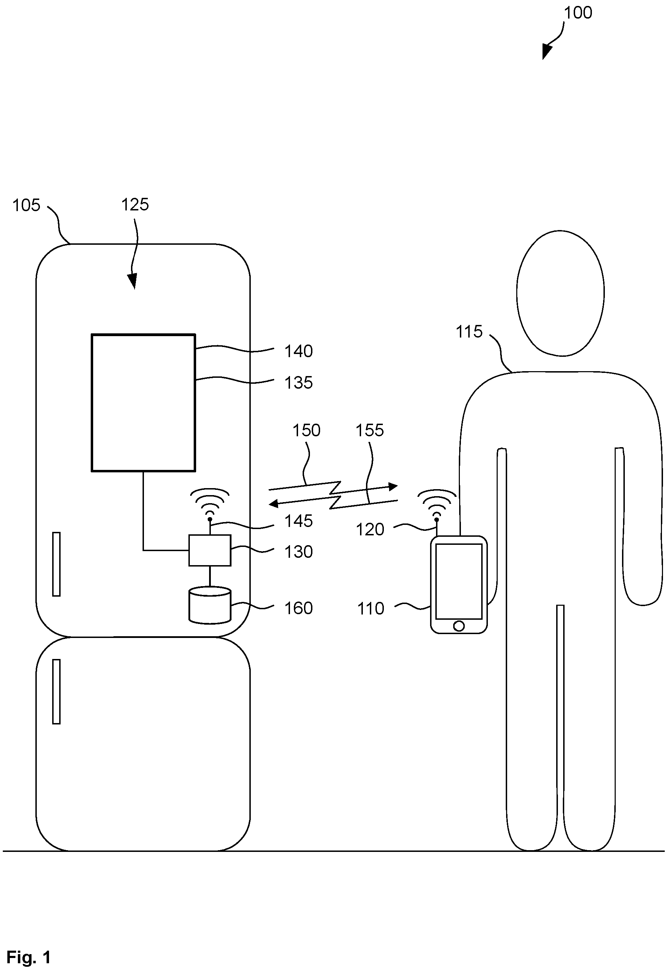

Figur 1 zeigt ein System 100 mit wenigstens einem Haushaltsgerät 105 und einem Mobilgerät 110. Eine optionale zentrale Stelle kann ebenfalls vorgesehen sein. Ein beispielhaftes Haushaltsgerät 105 ist als Kühlgerät dargestellt; es können jedoch auch andere Geräte verwendet werden, beispielsweise ein Herd, eine Dunstabzugshaube oder ein Rührgerät. Das Haushaltsgerät 105 kann insbesondere ein Küchengerät umfassen, das zum Betrieb in einer Küche eines Haushalts eingerichtet ist. Die Haushaltsgeräte 105 befinden sich bevorzugt nahe beieinander, beispielsweise im gemeinsamen Haushalt oder einem gemeinsamen Zimmer wie einer Küche.

Das Mobilgerät 110 umfasst bevorzugt ein Smartphone, einen Tabletcomputer oder eine Fitnessuhr und ist üblicherweise einem vorbestimmten Benutzer 115 zugeordnet, der das Mobilgerät 110 bei sich tragen kann. Auf dem Mobilgerät 110 kann eine vorbestimmte Funktion bereitgestellt werden, die insbesondere durch ein zugeordnetes Programm oder eine Applikation erbracht werden kann. Beispielhafte Funktionen umfassen die Verwaltung einer Sammlung von Kochrezepten, eine akustische oder textuelle Kommunikation mit einem anderen, entfernten Benutzer oder eine Ausgabe von Musik. Dazu kann die Funktion mittels einer lokalen Ausgabevorrichtung am Mobilgerät 110 eine Ausgabe an den Benutzer 115 bereitstellen, insbesondere in optischer, akustischer oder haptischer Form. Ferner kann die Funktion eine Eingabe des Benutzers 115 an einer lokalen Eingabevorrichtung des Mobilgeräts 110 auswerten, die dieser beispielsweise manuell bereitstellt. Dazu können entsprechende Ein- und/oder Ausgabevorrichtungen am Mobilgerät 110 vorgesehen sein. Das Mobilgerät 110 kann auch zur Auswertung weiterer Eingaben oder Umgebungsparameter eingerichtet sein, die mittelbar durch den Benutzer 115 gesteuert werden können, etwa eine Position, eine Beschleunigung oder eine Umgebungshelligkeit.

Das Mobilgerät 110 ist üblicherweise dazu eingerichtet, mit einem drahtlosen Netzwerk verbunden zu werden, insbesondere einem Weitverkehrsnetz wie dem Internet. Über diese Verbindung kann das Mobilgerät 110 auch mit einer zentralen Stelle wie z.B. einem Internet-Server kommunizieren. Dazu kann das Mobilgerät 110 etwa WLAN oder Mobilfunk verwenden. Ferner umfasst das Mobilgerät 110 bevorzugt eine drahtlose Kommunikationseinrichtung 120, die dazu eingerichtet ist, eine drahtlose Datenverbindung mit einem lokalen Gerät aufzubauen, beispielsweise mit dem Haushaltsgerät 105.

Das Haushaltsgerät 105 umfasst eine Steuervorrichtung 125, die bevorzugt zur Steuerung einer Funktion des Haushaltsgeräts 105 eingerichtet ist. In einer Ausführungsform ist die Steuervorrichtung 125 dazu eingerichtet, mehrere Haushaltsgeräte 105 zu steuern. Eine Steuervorrichtung 125 kann auch eigenständig und nicht als Teil eines Haushaltsgeräts 105 ausgeführt sein. Eine Kommunikation zwischen der Steuervorrichtung 125 und einem zugeordneten Haushaltsgerät 105 erfolgt in diesem Fall bevorzugt drahtlos, beispielsweise mittels einer Technik, die als Home Connect bekannt ist. In einem Haushalt können auch mehrere Steuervorrichtungen 125 vorgesehen sein, die jeweils zur Steuerung wenigstens eines Haushaltsgeräts 105 eingerichtet sind. Dabei können die Steuervorrichtungen 125 ebenfalls miteinander datentechnisch verbunden sein.

Die Steuervorrichtung 125 umfasst eine Verarbeitungseinrichtung 130, eine Eingabevorrichtung 135, eine Ausgabevorrichtung 140 und eine drahtlose Kommunikationseinrichtung 145. Die Eingabevorrichtung 135 und die Ausgabevorrichtung 140 sind vorliegend beispielhaft als berührungsempfindlicher Bildschirm miteinander integriert ausgeführt. Eine Eingabe des Benutzers 115 kann durch Berühren eines Bereichs der Eingabevorrichtung 135 bereitgestellt werden, wobei in dem Bereich auf der Ausgabevorrichtung 140 ein optischer Hinweis auf die Eingabe dargestellt werden kann. So können kontextsensitiv unterschiedliche Eingaben ermöglicht werden.

Es wird vorgeschlagen, eine drahtlose Kopplung des Mobilgeräts 110 mit dem Haushaltsgerät 105 durchzuführen. Dann kann eine Eingabe des Benutzers 115 auf der Eingabevorrichtung 135 des Haushaltsgeräts 105 an das Mobilgerät 110 übermittelt und dort zur Steuerung der Funktion verwendet werden. In entsprechender Weise kann eine Ausgabe einer auf dem Mobilgerät 110 ablaufenden Funktion an das Haushaltsgerät 105 übermittelt und dort mittels der Ausgabevorrichtung 140 an den Benutzer 115 bereitgestellt werden.

In einer Ausführungsform können Eingaben und Ausgaben über eine einzige Datenverbindung übermittelt werden. In einer anderen Ausführungsform können eine erste Datenverbindung 150 zur Übermittlung der Eingabe und eine zweite Datenverbindung 155 zur Übermittlung der Ausgabe eingerichtet werden. Dabei können die Datenverbindungen 150, 155 voneinander unabhängig sein und unterschiedliche Protokolle oder Technologien verwenden, oder als nur eine bidirektionale Verbindung ausgeführt sein. Üblicherweise werden die Datenverbindungen 150, 155 jedoch als gemeinsame, bidirektionale Datenverbindung behandelt und gemeinsam auf- oder abgebaut.

Über die erste Datenverbindung 150 kann sich die Steuervorrichtung 125 als Benutzerschnittstelle (user interface, UI) darstellen, die dazu eingerichtet ist, Eingaben des Benutzers 115 zu erfassen und bereitzustellen. Als zugrunde liegendes Protokoll für die Datenverbindung 150 können beispielsweise WLAN oder Bluetooth verwendet werden.

Über die zweite Datenverbindung 155 kann sich die Steuervorrichtung 125 gegenüber dem Mobilgerät 110 als UI Streaming Server darstellen, also als Gerät, das einen Strom von Ausgabedaten akzeptiert, die an einen Benutzer 115 gerichtet sein können. Als zugrunde liegendes Protokoll können beispielsweise Miracast oder AirPlay verwendet werden, die ihrerseits auf WLAN oder Bluetooth aufbauen können.

Eine Entfernung zwischen dem Haushaltsgerät 105 und dem Mobilgerät 110 kann auf der Basis einer der Datenverbindungen 150, 155 bestimmt werden. Insbesondere kann die Kommunikationseinrichtung 145 dazu eingerichtet sein, die Entfernung und optional auch eine Richtung des Mobilgeräts 110 auf der Basis von Übertragungsparametern abzuschätzen. Insbesondere können eine Signalstärke, ein Signal-Rausch-Verhältnis oder eine Fehlerrate zur Entfernungsbestimmung verwendet werden. Sind mehrere Antennen verfügbar, können zueinander korrespondierende Parameter zur Entfernungsbestimmung in einen Kontext gesetzt werden. Die Entfernung kann seitens der Steuervorrichtung 120 oder seitens des Mobilgeräts 110 bestimmt werden. Eine seitens des Mobilgeräts 110 bestimmte Entfernung kann an das Haushaltsgerät 105 übermittelt werden.

Das Mobilgerät 110 kann auch seine geographische Position bestimmen, beispielsweise auf der Basis von Bestimmungen eines Empfängers eines satellitengestützten Navigationssystems, eines Inertialsystems und/oder einer Entfernung zu einem der Haushaltsgeräte 105. Dazu kann ein Haushaltsgerät 105 ein Beacon implementieren, das seine eigene Position mittels drahtloser Signale bereitstellt. Diese Technik kann insbesondere auf der Basis von Bluetooth Low Energy (BTLE) leicht genutzt werden. Die Position des Mobilgeräts 110 kann dann auf der Basis der übermittelten Position und einer Entfernung zum Haushaltsgerät 105 bestimmt werden, die auf der Basis von Übertragungsparametern des drahtlosen Signals bestimmt werden kann. Die bestimmte Position des Mobilgeräts 110 kann an das Haushaltsgerät 115 übermittelt werden, das dann auf der Basis seiner eigenen Position die Entfernung zum Mobilgerät 110 bestimmen kann.

Bevorzugt ist die Verarbeitungseinrichtung 130 dazu eingerichtet, Eigenschaften der Ausgabevorrichtung 140 und Anforderungen einer empfangenen Ausgabe des Mobilgeräts 110 aneinander anzupassen. Beispielsweise können eine Orientierung (Hochformat oder Querformat), eine Farbfähigkeit, eine grafische Auflösung oder eine Größe eines verfügbaren Anzeigebereichs der Ausgabevorrichtung 140 als Eigenschaft an das Mobilgerät 110 bereitgestellt werden. Sollte das Mobilgerät 110 eine Ausgabe bereitstellen, die diesen Vorgaben nicht folgt, so kann die Verarbeitungseinrichtung 130 eine entsprechende Umformung der Ausgabe vornehmen. Dabei können beispielsweise Darstellungsgrößen oder Auflösungen ineinander umgerechnet werden oder eine Farbpalette kann reduziert oder anders belegt werden.

In manchen Ausführungsformen kann ein Anzeigebereich auf der Ausgabevorrichtung 140 für eine Funktion des Mobilgeräts 110 dynamisch zur Verfügung gestellt sein. In diesem Fall kann die Umrechnung transparent erfolgen oder geänderte Eigenschaften der Ausgabevorrichtung 140 können an das Mobilgerät 110 gemeldet werden.

In einer Ausführungsform ist eine Speichervorrichtung 160 vorgesehen, die mit der Verarbeitungseinrichtung 130 der Steuervorrichtung 125 verbunden ist. Die Speichervorrichtung 160 ist bevorzugt dazu eingerichtet, als Zwischenspeicher (Cache) zu arbeiten und eine Information vorübergehend aufzunehmen, die aufgrund einer Störung in der Datenverbindung 150 nicht an das Mobilgerät 110 übermittelt werden kann. Insbesondere kann bei Bedarf eine an der Eingabevorrichtung 135 erfasste Eingabe zwischengespeichert werden, bis die Datenverbindung 150 wieder hergestellt ist. Eine korrespondierende Speichervorrichtung kann seitens des Mobilgeräts 110 vorgesehen sein, um eine Ausgabe, die aufgrund einer unterbrochenen Datenverbindung 155 vorübergehend nicht an das Haushaltsgerät 105 übermittelt werden kann, zwischenzuspeichern. Ein entsprechender Zwischenspeicher kann seitens des Mobilgeräts 110 vorgesehen sein, um eine möglicherweise nicht zustellbare Ausgabe zu speichern, bis die Datenverbindung 155 wieder hergestellt ist.

Es ist bevorzugt, dass das Haushaltsgerät 105 eine erste Softwarekomponente und das Mobilgerät 110 eine zweite Softwarekomponente umfasst, die Eingaben und/oder Ausgaben untereinander austauschen. Dabei können die Komponenten jeweils auf eine zugrunde liegende Funktionalität des Haushaltsgeräts 105 beziehungsweise des Mobilgeräts 110 aufbauen, die eine Übermittlung über die Datenverbindungen 150, 155 bereitstellen. Sollte eine der Datenverbindungen 150, 155 vorübergehend getrennt werden, beispielsweise weil sich die Geräte 105, 110 außerhalb einer maximal überbrückbaren Reichweite befinden, weil Antennen ungünstig zueinander ausgerichtet sind oder weil sich ein Objekt, etwa eine Person 115, in einer Fresnelzone der Antennen befindet, so können zu übermittelnde Informationen seitens des Haushaltsgeräts 105 in der Speichervorrichtung 160 und/oder seitens des Mobilgeräts 110 in einer korrespondierenden Speichervorrichtung abgespeichert werden. Sollte die Datenverbindung 150, 155 innerhalb einer vorbestimmten Zeit, beispielsweise ca. 10, ca. 5 oder ca. 2 Sekunden, wieder verfügbar werden, so können die abgespeicherten Inhalte übermittelt und die Speichervorrichtungen ausgeleert werden. Die Softwarekomponenten müssen von der unterbrochenen oder gestörten Datenverbindung 150, 155 nicht benachrichtigt werden. So kann beispielsweise eine kontinuierliche Ausgabe von akustischen Informationen, die seitens des Mobilgeräts bereitgestellt werden, seitens des Haushaltsgeräts 105 sichergestellt werden. Sollte eine Datenverbindung 150, 155 länger als die vorbestimmte Zeit unterbrochen oder gestört sein, so können beide Datenverbindungen 150, 155 oder nur die betroffene Datenverbindung 150, 155 abgebaut werden. Ein erneutes Aufbauen einer Datenverbindung 150, 155 kann eine neue Authentifikation eines der Geräte 105, 110 erfordern.

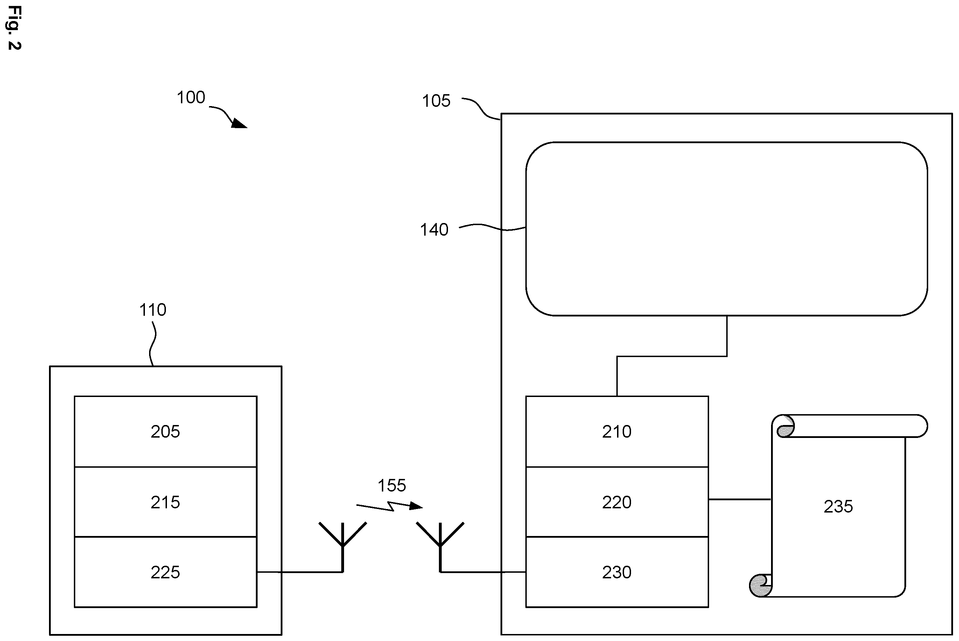

Figur 2 zeigt eine Kommunikation zwischen einem Mobilgerät 110 und einem Haushaltsgerät 105. Die dargestellte Kommunikation betrifft eine Übermittlung einer Ausgabe vom Mobilgerät 110 an das Haushaltsgerät 105. In entsprechender Weise kann jedoch auch eine Eingabe am Haushaltsgerät 105 behandelt und an das Mobilgerät 110 übermittelt werden.

Im Mobilgerät 110 ist eine erste Softwarekomponente 205 vorgesehen, die eine Ausgabe erzeugt. Die Ausgabe kann beispielsweise einen Text oder eine Grafik umfassen. Die Softwarekomponente 205 macht Gebrauch von einer schichtartigen Abstraktion der Kommunikation, wie sie beispielsweise im ISO-OSI-Modell vorgeschlagen ist. Die erste Softwarekomponente 205 stellt die Ausgabe einer zweiten Softwarekomponente 210 bereit, die seitens des Haushaltsgeräts 105 vorgesehen ist und die Ausgabe auf der Ausgabevorrichtung 140 darstellen kann.

Allerdings erfolgt die Übertragung der Ausgabe nicht unmittelbar zwischen den Komponenten 205 und 210, sondern die erste Softwarekomponente 205 gibt die Ausgabe an eine darunterliegende erste Übermittlungsschicht 215 weiter, welche die Ausgabe an eine zweite Übermittlungsschicht 220 seitens des Haushaltsgeräts 105 übermittelt. Die Übermittlungsschichten 215 und 220 können beispielsweise dazu eingerichtet sein, eine Flusskontrolle, eine Quittierung oder eine Neuübertragung im Fehlerfall zu steuern.

Doch auch zwischen den Übermittlungsschichten 215 und 220 erfolgt nur im abstrakten Sinn eine direkte Kommunikation. Tatsächlich gibt die erste Übermittlungsschicht 215 zu übermittelnde Daten an eine erste physische Schicht 225 weiter, welche die Daten drahtlos über die Datenverbindung 155 an eine zweite physische Schicht 230 seitens des Haushaltsgeräts 105 übermittelt. Die physischen Schichten 225 und 230 können beispielsweise eine Umwandlung von Bits in physische Signale wie Strom oder Frequenzen umwandeln.

Obwohl vorliegend beispielhaft drei Schichten 205, 215, 225 bzw. 210, 220 und 230 beschrieben sind, können auch beliebig mehr oder weniger Schichten vorgesehen sein.

Es wird vorgeschlagen, dass seitens des Haushaltsgeräts 105 ein Regelwerk 235 vorgesehen ist, das beispielsweise nach Art einer Steuerliste einer Firewall verwendet wird, um zu bestimmen, ob eine über die Datenverbindung 155 empfangene Ausgabe auf der Ausgabevorrichtung 140 ausgegeben werden soll oder nicht. Beispielhaft wird das Regelwerk 235 auf der Übermittlungsschicht 220 angewandt. Auf dieser Schicht können Metainformationen über das Mobilgerät 110, die erste Softwarekomponente 205, einen mit dem Mobilgerät 110 verbundenen Benutzer oder Übermittlungsparameter vorliegen, die bezüglich des Regelwerks 235 analysiert werden können.

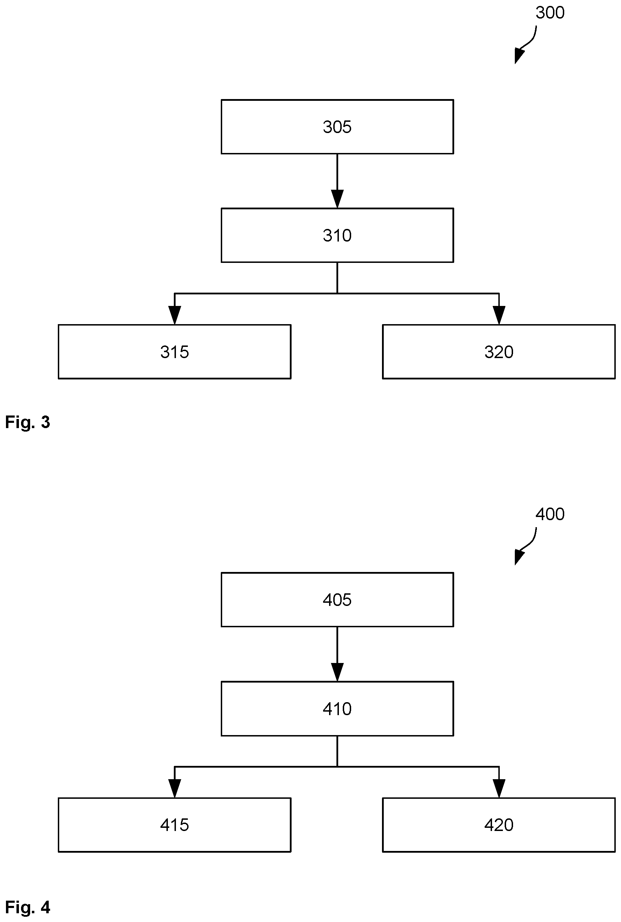

Figur 3 zeigt ein erstes Verfahren 300 zum Steuern eines Haushaltsgeräts 105. Es wird davon ausgegangen, dass das Haushaltsgerät 105 mittels einer drahtlosen Datenverbindung 155 mit dem Mobilgerät 110 gekoppelt ist.

In einem Schritt 305 kann eine Ausgabe des Mobilgeräts 110 empfangen werden. Die Ausgabe kann allgemein solche an einen Benutzer gerichtete Informationen umfassen, die seitens des Mobilgeräts 110 bereitgestellt werden können, falls keine Kopplung vorliegt. Mithilfe der Kopplung kann das Haushaltsgerät 105 bzw. eine von ihm umfasste Steuervorrichtung 125 als entfernte Ausgabevorrichtung verwendet werden.

Sollte eine Kopplung zwischen dem Haushaltsgerät 105 und dem Mobilgerät 110 noch nicht bestehen, so kann sie hergestellt werden, sodass die Datenverbindungen 150, 155 benutzt werden können. Die Kopplung kann beispielsweise wieder aufgelöst werden, wenn eine vorbestimmte Distanz zwischen dem Haushaltsgerät 105 und dem Mobilgerät 110 überschritten ist. In einer Ausführungsform erfolgt eine Kopplung nur, falls die Distanz einen zweiten Schwellenwert unterschreitet. Der zweite Schwellenwert kann kleiner als der erste sein, sodass das Auf- und Abbauen mit einer vorbestimmten Hysterese erfolgen kann. Flackerhaftes Auf- und Abbauen der Kopplung kann so verhindert werden. In einer weiteren Ausführungsform kann auch eine Hysterese für eine Übergabe einer Kopplung von einem Haushaltsgerät 105 auf ein anderes Haushaltsgerät 105 vorgesehen sein. In noch einer weiteren Ausführungsform kann ein Kontrollpunkt vorgegeben sein, den das Mobilgerät 110 passieren muss, bevor eine Kopplung mit einem Haushaltsgerät 105 durchgeführt wird. Beim Passieren eines weiteren Kontrollpunkts durch das Mobilgerät 110 kann eine bestehende Kopplung zu einem zugeordneten Haushaltsgerät 105 abgebaut werden.

In einem Schritt 310 kann das Regelwerk 235 auf die empfangene Ausgabe angewandt werden. Insbesondere kann geprüft werden, ob ein Inhalt der Ausgabe, ein Format der Ausgabe oder eine Metainformation, die beim Übermitteln der Ausgabe angefallen ist, das Bereitstellen der Ausgabe auf der Ausgabevorrichtung 140 erlaubt oder nicht.

Wird bestimmt, dass die Ausgabe nicht ausgegeben werden darf, so kann sie in einem Schritt 315 verworfen werden. Zusätzlich kann die Datenverbindung 155 abgebrochen oder abgebaut werden. Eine zur Ausgabe korrespondierende Eingabe kann ebenfalls verworfen werden.

Andernfalls, wenn im Schritt 310 bestimmt wurde, dass die Ausgabe auf der Ausgabevorrichtung 140 bereitgestellt werden darf, kann sie in einem Schritt 320 ausgegeben werden.

Figur 4 zeigt ein zweites Verfahren 400, das ebenfalls auf einem Haushaltsgerät 105 ablaufen kann, das mit einem Mobilgerät 110 gekoppelt ist. Insbesondere kann das zweite Verfahren 400 parallel oder nebenläufig zum ersten Verfahren 300 ausgeführt werden.

In einem Schritt 405 kann eine Eingabe an der Eingabevorrichtung 135 des Haushaltsgeräts 105 erfasst werden. In einem Schritt 410 kann das Regelwerk 235 auf die erfasste Eingabe angewandt werden. Dabei können insbesondere ein Inhalt und ein Kontext der Eingabe überprüft werden. Die Eingabe kann insbesondere auf ein Mobilgerät 110, eine Softwarekomponente 205 oder einen mit dem Mobilgerät 110 verbundenen Benutzer bezogen sein.

Wurde bestimmt, dass die Eingabe aufgrund eines ihrer Aspekte auf der Basis des Regelwerks 235 nicht zulässig ist, so kann sie in einem Schritt 415 verworfen werden. Außerdem kann eine korrespondierende Ausgabe, wie sie oben im Zusammenhang mit dem ersten Verfahren 300 beschrieben wurde, ebenfalls verworfen werden. Eine Datenverbindung 155 zum Mobilgerät 110 kann abgebaut oder abgebrochen werden.

Andernfalls, wenn im Schritt 410 bestimmt wurde, dass die Eingabe zulässig ist, kann sie in einem Schritt 420 an das Mobilgerät 110 übermittelt werden.

### Bezugszeichen

- 100: System
- 105: Haushaltsgerät
- 110: Mobilgerät
- 115: Benutzer
- 120: Kommunikationseinrichtung
- 125: Steuervorrichtung
- 130: Verarbeitungseinrichtung
- 135: Eingabevorrichtung
- 140: Ausgabevorrichtung
- 145: drahtlose Kommunikationseinrichtung
- 150: erste Datenverbindung (Eingabe)
- 155: zweite Datenverbindung (Ausgabe)
- 160: Speichervorrichtung

- 205: erste Softwarekomponente
- 210: zweite Softwarekomponente
- 215: erste Übermittlungsschicht
- 220: zweite Übermittlungsschicht
- 225: erste physische Schicht
- 230: zweite physische Schicht
- 235: Regelwerk

- 300: Verfahren
- 305: Ausgabe empfangen
- 310: Regelwerk anwenden
- 315: Ausgabe verwerfen
- 320: Ausgabe ausgeben

- 400: Verfahren
- 405: Eingabe erfassen
- 410: Regelwerk anwenden
- 415: Eingabe verwerfen
- 420: Eingabe übermitteln

## Patentansprüche

1. Haushaltsgerät (105), umfassend:
- eine Kommunikationseinrichtung (145) zur drahtlosen Kommunikation;
- eine Ausgabevorrichtung (140), nämlich eine grafische Anzeige, auf der ein Zustand des Haushaltsgeräts (105) anzeigbar ist; und
- eine Verarbeitungseinrichtung (130);
wobei
- die Verarbeitungseinrichtung (130) dazu eingerichtet ist, eine Anzahl von Mobilgeräten (110), worauf mindestens zwei eine jeweilige Ausgabe erzeugende Programme (A, B, C, D) installiert sind, drahtlos mit dem Haushaltsgerät (105) zu koppeln,
- die Ausgabevorrichtung (140) des Haushaltsgeräts (105) dazu verwendbar ist, einem Benutzer auf dem Haushaltsgerät (105) eine über die Steuerung des Haushaltsgeräts (105) hinausgehende zusätzliche Funktion, nämlich die Ausgabe eines der Programme (A, B, C, D) der Anzahl von Mobilgeräten (110) anzuzeigen, und
- die Anzahl von Mobilgeräten (110) ein erstes und ein zweites Mobilgerät umfasst, die mit dem Haushaltsgerät (105) koppelbar sind;
**dadurch gekennzeichnet, dass**
- die Verarbeitungseinrichtung (130) eine Priorität von Ausgaben der Mobilgeräte (110) auf der Basis eines vorbestimmten Regelwerks (235) bestimmt und dazu eingerichtet ist, auf der Basis des Regelwerks (235) zu entscheiden, die Ausgabe welches der mindestens zwei Programme (A, B, C, D) des ersten und zweiten Mobilgeräts (110) in welcher Form auf der Ausgabevorrichtung (140) des Haushaltsgeräts angezeigt wird, wobei das Haushaltsgerät (105) auf der Ausgabevorrichtung (140) zu jedem Zeitpunkt nur die mit der höchsten Priorität versehene Ausgabe anzeigt;
- wobei es sich beim Haushaltsgerät (105) um ein Küchengerät und bei der Ausgabevorrichtung (140) um ein Touchscreen handelt, wobei das Touchscreen eine Bedienbarkeit einer Funktion des Haushaltsgeräts (105) sicherstellt,
- wobei ein vorbestimmter Abschnitt der Ausgabevorrichtung (140) zur Darstellung eines Parameters reserviert ist, der einer Steuerung der Funktion des Haushaltsgeräts (105) zugeordnet ist, so dass das Haushaltsgerät (105) unabhängig von der Bereitstellung der von den Mobilgeräten (110) empfangenen Ausgabe durch einen Benutzer steuerbar bleibt.

2. Haushaltsgerät (105) nach Anspruch 1,
wobei die Verarbeitungseinrichtung (130) des Haushaltsgeräts (105) dazu eingerichtet ist, das Regelwerk (235) von einer externen Stelle herunterzuladen.

3. Haushaltsgerät (105) nach einem der vorangehenden Ansprüche,
wobei das Regelwerk (235) eine erste Angabe von Mobilgeräten (110) umfasst, deren Ausgaben auf der Ausgabevorrichtung (140) nicht angezeigt werden dürfen.

4. Haushaltsgerät (105) nach einem der vorangehenden Ansprüche,
wobei das Regelwerk (235) eine zweite Angabe von Mobilgeräten (110) umfasst, deren Ausgaben auf der Ausgabevorrichtung (140) angezeigt werden dürfen.

5. Haushaltsgerät (105) nach einem der vorangehenden Ansprüche,
ferner umfassend eine Eingabevorrichtung (135),
wobei die Verarbeitungseinrichtung (130) dazu eingerichtet ist, eine Eingabe an der Eingabevorrichtung (135) an ein oder mehrere durch das Regelwerk (235) festgelegte Mobilgeräte (110) der Anzahl von Mobilgeräten (110) zu übermitteln.

6. Haushaltsgerät (105) nach Anspruch 5,
ferner umfassend eine Speichervorrichtung (160), die dazu eingerichtet ist, eine Eingabe zu speichern, falls eine drahtlose Kopplung (150, 155) zu einem oder mehreren Mobilgeräten der Anzahl von Mobilgeräten (110) vorübergehend unterbrochen ist.

7. System (100), umfassend
- ein Haushaltsgerät (105) nach einem der vorangehenden Ansprüche und
- mindestens zwei Mobilgeräte (110),
wobei das Haushaltsgerät (105) und die Mobilgeräte (110) drahtlos miteinander gekoppelt sind.

8. System nach Anspruch 7,
wobei auf den Mobilgeräten (110) jeweils eine erste Komponente (205) zum Erzeugen der Ausgabe ausgeführt wird und auf dem Haushaltsgerät (105) eine zweite Komponente (210) zum Anzeigen der Ausgabe auf der Ausgabevorrichtung (140) ausgeführt wird.

## Claims

1. Household appliance (105), comprising:
- a communication facility (145) for wireless communication;
- an output apparatus (140), namely a graphic display, on which a state of the household appliance (105) can be displayed; and
- a processing facility (130);
wherein
- the processing facility (130) is designed to couple a number of mobile devices (110), upon which at least two programs (A, B, C, D) generating a respective output are installed, wirelessly to the household appliance (105),
- the output apparatus (140) of the household appliance (105) can be used to display to a user on the household appliance (105) an additional function which extends beyond the control of the household device (105), namely the output of one of the programs (A, B, C, D) of the number of mobile devices (110), and
- the number of mobile devices (10) comprises a first and a second mobile device which can be coupled to the household appliance (105);
**characterised in that**
- the processing facility (130) determines a priority of outputs of the mobile devices (110) on the basis of a predetermined system of rules (235) and is designed to decide, on the basis of the system of rules (235), the output of which of the at least two programs (A, B, C, D) of the first and second mobile device (110) is displayed in which form on the output apparatus (140) of the household appliance, wherein the household appliance (105) only displays the output provided with the highest priority on the output apparatus (140) at any point in time;
- wherein the household appliance (105) is a kitchen appliance and the output apparatus (140) is a touchscreen, wherein the touchscreen ensures an operability of a function of the household appliance (105),
- wherein a predetermined section of the output apparatus (140) is reserved for display of a parameter which is assigned to a control of the function of the household appliance (105) so that the household appliance (105) remains controllable by a user independently of the provision of the output received by the mobile devices (110).

2. Household appliance (105) according to claim 1,
wherein the processing facility (130) of the household appliance (105) is designed to download the system of rules (235) from an external location.

3. Household appliance (105) according to one of the preceding claims,
wherein the system of rules (235) comprises a first specification of mobile devices (110), the outputs of which are not permitted to be displayed on the output apparatus (140).

4. Household appliance (105) according to one of the preceding claims, wherein the system of rules (235) comprises a second specification of mobile devices (110), the outputs of which are permitted to be displayed on the output apparatus (140).

5. Household appliance (105) according to one of the preceding claims,
further comprising an input apparatus (135),
wherein the processing facilty (130) is designed to transfer an input on the input apparatus (135) to one or more mobile devices (110) of the number of mobile devices (110) defined by the system of rules (235).

6. Household appliance (105) according to claim 5,
further comprising a storage apparatus (160), which is designed to store an input if a wireless coupling (150, 155) to one or more mobile devices of the number of mobile devices (110) is largely interrupted.

7. System (100) comprising
- a household appliance (105) according to one of the preceding claims and
- at least two mobile devices (110),
wherein the household appliance (105) and the mobile devices (110) are coupled wirelessly with one another.

8. System according to claim 7,
wherein a first component (205) for generating the output is executed on the mobile devices (110) in each case and a second component (210) for displaying the output on the output apparatus (140) is executed on the household appliance (105).

## Revendications

1. Appareil électroménager (105), comprenant :
- un dispositif de communication (145) pour une communication sans fil,
- un dispositif de sortie (140), précisément un affichage graphique, sur lequel un état de l'appareil électroménager (105) peut être affiché, et
- un dispositif de traitement (130),
dans lequel
- le dispositif de traitement (130) est configuré de façon à coupler sans fil une pluralité d'appareils mobiles (110) avec l'appareil électroménager (105), sur lesquels au moins deux programmes (A, B, C, D) générant une sortie respective sont installés,
- le dispositif de sortie (140) de l'appareil électroménager (105) peut être utilisé pour afficher à un utilisateur sur l'appareil électroménager (105) une fonctionnalité supplémentaire surpassant la commande de l'appareil électroménager (105), précisément la sortie d'un des programmes (A, B, C, D) de la pluralité d'appareils mobiles (110), et
- la pluralité d'appareils mobiles (110) comprend un premier et un deuxième appareil mobile, qui peuvent être couplés à l'appareil électroménager (105),
**caractérisé en ce que** :
- le dispositif de traitement (130) détermine une priorité des sorties des appareils mobiles (110) sur la base d'une réglementation prédéfinie (235), et est configuré pour décider, sur la base de la règlementation (235), lequel des au moins deux programmes (A, B, C, D) du premier et du deuxième appareil mobile (110) est affiché et dans quelle forme sur le dispositif de sortie (140) de l'appareil électroménager, dans lequel l'appareil électroménager (105) affiche sur le dispositif de sortie (104) à chaque moment uniquement la sortie ayant la plus haute priorité,
- dans lequel, concernant l'appareil électroménager (105), il s'agit d'un appareil de cuisine, et, concernant le dispositif de sortie (140), il s'agit d'un écran tactile, dans lequel l'écran tactile assure une facilité d'utilisation d'une fonctionnalité de l'appareil électroménager (105),
- dans lequel une section prédéterminée du dispositif de sortie (140) est réservée pour représenter un paramètre, qui est associé à une commande de fonctionnalité de l'appareil électroménager (105), de sorte que l'appareil électroménager (105) demeure commandable par un utilisateur indépendamment de la fourniture de la sortie reçue des appareils mobiles (110).

2. Appareil électroménager (105) selon la revendication 1,
dans lequel le dispositif de traitement (130) de l'appareil électroménager (105) est configuré pour télécharger la règlementation (235) à partir d'un organe externe.

3. Appareil électroménager (105) selon l'une des revendications précédentes,
dans lequel la règlementation (235) comprend une première indication des appareils mobiles (110) dont les sorties ne sont pas autorisées à être affichées sur le dispositif de sortie (140).

4. Appareil électroménager (105) selon l'une des revendications précédentes,
dans lequel la règlementation (235) comprend une deuxième indication des appareils mobiles (110) dont les sorties sont autorisées à être affichées sur le dispositif de sortie.

5. Appareil électroménager (105) selon l'une des revendications précédentes, comprenant en outre un dispositif d'entrée (135),
dans lequel le dispositif de traitement (130) est configuré pour transmettre une entrée sur le dispositif d'entrée (135) à un ou plusieurs appareils mobiles (110) indiqués par la règlementation (235) de la pluralité des appareils mobiles (110).

6. Appareil électroménager (105) selon la revendication 5,
comprenant en outre un dispositif de mémoire (160), qui est configuré pour mémoriser une entrée dans le cas où un couplage sans fil (150, 155) avec un ou plusieurs appareils mobiles de la pluralité d'appareils mobiles (110) est interrompu temporairement.

7. Système (100) comprenant :
- un appareil électroménager (105) selon l'une des revendications précédentes, et
- au moins deux appareils mobiles (110),
dans lequel l'appareil électroménager (105) et les appareils mobiles (110) sont couplés l'un à l'autre sans fil.

8. Système selon la revendication 7,
dans lequel un premier composant (205) est adapté pour générer la sortie sur les appareils mobiles respectifs (110) et un deuxième composant (210) est adapté pour afficher la sortie sur le dispositif de sortie (140) sur l'appareil électroménager (105).
